# EUROPEAN PATENT APPLICATION

(11) **EP 4 807 173 A1**
(43) Date of publication of application: **16.09.2026**
(21) Application number: 25163171.9
(22) Date of filing: 12.03.2025
(51) Int. Cl.: F03D 7/02

(54) **INDIVIDUAL PITCH CONTROL**

(71) Applicant: Siemens Gamesa Renewable Energy A/S, 7330 Brande (DK)
(72) Inventor: PIERCE, Kirk, Lafayette 80026 (US); ESBENSEN, Thomas, 7400 Herning (DK)
(74) Representative: SGRE-Association

(57) **Abstract**

It is described a method of individual pitch control of three rotor blades (4a,b,c) of a wind turbine (1), in particular for reducing loads, the method comprising: determining tilt moment (12) and yaw moment (15) acting on the wind turbine (1), in particular from load measurement signals (17a,b,c); determining at least one maximal amplitude (39,23,24) of a pitch angle offset based on the tilt moment (12) and the yaw moment (15), the maximal amplitude (39,23,24) of a pitch angle offset being in particular prioritized for the reduction of loading in a selected moment direction; deriving individual amplitudes (26a,b,c) of pitch angle offsets for the three blades (4a,b,c), the amplitudes being restricted to be not greater than the maximal amplitude (39,23,24) of a pitch angle offset.

## Description

### Field of invention

The present invention relates to a method and to a corresponding arrangement of individual pitch control of three rotor blades of a wind turbine. Furthermore, the present invention relates to a wind turbine comprising the arrangement being configured to carry out the method of individual pitch control.

### Art Background

In a conventional individual pitch control (IPC) system, pitch angles of rotor blades of a wind turbine are set individually to potentially different values. Due to hardware limitations or other restrictions, pitching may only be possible up to a maximum pitch amplitude. Individual pitch control is applied for load reduction of moments acting on the wind turbine.

It has been observed that conventional methods and systems for individual pitch control do not give in all situations or conditions or circumstances reasonable results in terms of effective load reduction and/or flexibility and/or adaptability to particular applications or requirements.

Thus, there may a need for a method and a corresponding arrangement of individual pitch control of three rotor blades of a wind turbine, wherein flexibility is improved and/or where load reduction can effectively be performed and/or where constraints, such as hardware constraints or limitations, are met. Furthermore, it may be desirable to provide an individual pitch control methodology where pitch bearing damage can also be reduced or be kept in acceptable limits.

### Summary of the Invention

This need may be met by the subject matter according to the independent claims. Advantageous embodiments of the present invention are described by the dependent claims.

According to an embodiment of the present invention it is provided a method of individual pitch control of three rotor blades of a wind turbine, in particular for reducing loads, the method comprising: determining tilt moment and yaw moment acting on the wind turbine, in particular from load measurement signals, the vector addition of the tilt moment and the yaw moment being a total moment; determining at least one maximal amplitude, in particular two, of a pitch angle offset based on the tilt moment and the yaw moment, the maximal amplitude of a pitch angle offset that may be different for at least two different values of the total moment (each e.g. derivable by vector addition of the tilt moment and the yaw moment); deriving amplitudes of pitch angle offsets for tilt-direction and yaw-direction, the amplitudes being restricted to be not greater than the maximal amplitude of a pitch angle offset.

The method may be implemented in software and/or hardware and may be performed for example by a portion or a module of a wind turbine controller. Basic functionality of the individual pitch control may be similar as described in the paper by E. A. Bossanyi et al., "Individual Blade Pitch Control for Load Reduction", Wind Energ. 2003; 6:119-128. The method may involve sending different pitch angle demands to each blade of the wind turbine. During operation of the wind turbine, the blade loads may vary once-per-revolution together with harmonics of this frequency. The load components of the three blades may be 120° out of phase. It has been observed that 1P load component (i.e., load that varies with a period of one revolution of the rotor) may be significantly large and therefore may be damped or reduced according to embodiments of the present invention.

The tilt moment and the yaw moment relate to moments acting (on the wind turbine) in different directions, the tilt moment for example in (or acting about) the horizontal direction and the yaw moment in (or acting about) the vertical direction. The tilt moment and yaw moment may be calculated or derived from three measurement sets of the blade loads by performing a d-q axis transformation similar as is being applied for a three-phase electrical machine as described in the paper by Park R.H. "Two-reaction theory of synchronous machines." Transactions of the AIEE 1929; 48: 716-727. If the blade loads are measured, the Park or Coleman transformation is utilized to convert the measured loads into the d-q axis components, i.e., the tilt moment and the yaw moment.

The tilt moment and the yaw moment represent the load acting on the wind turbine which is aimed to be reduced by the individual pitch control. A total moment representing the combination of the tilt moment and the yaw moment may be considered as a vector in a coordinate system spanned by the tilt-moment-direction (for example a horizontal direction) and the yaw-moment-direction (for example a vertical direction). Depending on the location of this total moment (composed of the tilt moment component and the yaw moment component), the at least one maximal amplitude of a pitch angle offset may be determined. The maximal amplitude of a pitch angle offset or in particular a maximal amplitude of a pitch angle offset associated with a tilt-direction and (another) maximal amplitude of a pitch angle offset associated with a yaw-direction may then be considered to limit the amplitude of the pitch angle offset which is to be applied for reduction of the loading.

For a first value or the total moment and a different second value of the total moment, the respective maximal amplitude of the pitch angle offset may be different. Thus, the method may allow load-based activation thresholds of the maximal pitch angle offset to be utilized. Thereby, control flexibility may be enhanced and also prioritization may be possible between the different load directions. Furthermore, hardware restrictions may be complied with.

The individual offsets of the pitch angle for the three blades may then be derived from for example two controller outputs indicating adjustment signals in the tilt-direction and the yaw-direction which are then transformed using for example an inverse Coleman transformation into a three-dimensional space for the three rotor blades.

Embodiments of the present invention enable the prioritization (or not) of load reduction in a particular direction when limitations occur, for example hardware limitations. This may take into account that the turbine pitching system has a limited capacity. For example, if the individual pitch control pitch amplitude is limited due to hardware constraints, embodiments of the present invention allow the prioritization of the reduction of loading in the yaw-direction (or the tilt-direction) due to design limitations in this direction, whereas there may be a load margin in the tilt-direction (or yaw-direction) and thus load reductions in this direction may not be needed or may not be required. Furthermore, embodiments of the present invention may reduce the pitch bearing damage associated with the individual pitch control. For example, minor loading may be ignored which does not contribute significantly to fatigue damage or may not contribute to extreme loading. Minor loading may for example be ignored or partly ignored or for example only partly be handled or reduced by appropriately setting the maximal amplitude of the pitch angle offset depending on the total moment to be relatively small or even zero. Thus, embodiments of the present invention only activate the individual pitch control when the loading is sufficiently large, by appropriately setting the dependency of the maximal amplitude of the pitch angle offset in dependence of the total moment determined for example from the blade loads. Embodiments may allow to prioritize reductions of load separately in the tilt-direction and the yaw-direction. Further embodiments may comply with situations when limitations occur and may also handle load capacity differences in the tilt-direction and yaw-direction and may avoid or prevent pitching for insignificant load conditions.

According to an embodiment of the present invention, the method further comprises determining maximal amplitudes of a pitch angle offset associated with a tilt-direction and a yaw-direction, respectively, based on the tilt moment and the yaw moment; supplying the tilt moment and the maximal amplitude of the pitch angle offset associated with tilt-direction to a tilt moment controller outputting an amplitude of the pitch offset associated with tilt-direction being restricted to be not greater than the maximal amplitude of the pitch angle offset associated with tilt-direction; supplying the yaw moment and the maximal amplitude of the pitch angle offset associated with yaw-direction to a yaw moment controller outputting an amplitude of the pitch offset associated with yaw-direction being restricted to be not greater than the maximal amplitude of the pitch angle offset associated with the yaw-direction; deriving individual amplitudes and phases of pitch angle offsets for the three blades by transforming, in particular using inverse Coleman transformation, the amplitude of the pitch offset associated with tilt-direction and the amplitude of the pitch offset associated with yaw-direction.

Thus, the methodology involves individually determining a maximal amplitude of a pitch angle offset associated with the tilt-direction and separately determining a maximum amplitude of the pitch angle offset associated with the yaw-direction. This determination may be dependent for example on hardware limitations and/or application requirements and/or prioritization demands. The method may then utilize two controllers, one tilt moment controller and one yaw moment controller. The controllers receive the associated determined moment as well as the corresponding maximal amplitude of the pitch angle offset associated with the respective controller. The tilt moment controller/yaw moment controller is configured to derive an output signal aimed for reducing the load in the tilt-direction/yaw-direction. This output signal is limited or restricted by the respective maximal amplitude of the pitch angle offset associated with the respective direction or controller. Thereby, the reduction of the loading in the tilt-direction and the yaw-direction may individually be adjusted, as required by the application and/or hardware restriction and/or prioritization.

According to an embodiment of the present invention, the tilt moment controller is configured regarding its output to diminish an error between the tilt moment and a tilt moment set point being larger than zero; and/or wherein the yaw moment controller is configured regarding its output to diminish the yaw moment.

There may be a mean tilt moment during normal operation. The tilt moment setpoint may for example be set to this mean tilt moment. Thereby, for example, the tilt moment controller may not be saturated and may not try to diminish such an expected load.

According to an embodiment of the present invention, determining maximal amplitudes of a pitch angle offset associated with tilt and yaw based on the tilt moment and the yaw moment comprises: considering, in a coordinate system spanned by a tilt-direction and a yaw-direction, a lower load threshold closed curve and a higher load threshold closed curve, in particular ellipses; associating a common maximal amplitude of a pitch angle offset with any tilt-yaw point between the lower load threshold closed curve and the higher load threshold closed curve, the common maximal amplitude of a pitch angle offset being greater than or equal to zero at the lower load threshold closed curve and increasing to a highest maximal amplitude of the pitch angle offset when propagating from the lower load threshold closed curve to the higher load threshold closed curve; setting the maximal amplitudes of a pitch angle offset associated with tilt-direction and yaw-direction to be equal or different based on the common maximal amplitude of a pitch angle offset, in particular considering at least one hardware and/or operational restriction.

The lower load threshold closed curve may for example define loading in the tilt-direction and yaw-direction which do not contribute significantly to fatigue or extreme loading and which does not need to be reduced. This may apply to all points within the lower load threshold closed curve. Points outside the lower load threshold closed curve may be required to be reduced. Whenever the common maximal amplitude of a pitch angle offset is larger than zero, a load reduction will result due to the individual pitch control provided by the method. For example, the farther radially away a tilt-yaw point is from the lower load threshold closed curve, the higher the common maximal amplitude of the pitch angle offset may be set. The common maximal amplitude of the pitch angle offset may then apply to restrict both, the output of the tilt controller and the output of the yaw controller.

In other embodiments, for each controller, a separate maximal amplitude of the pitch angle offset is determined based on the common maximal amplitude of a pitch angle offset by considering other requirements or limitations or demands.

The highest maximal amplitude of the pitch angle offset may for example be derived by hardware limitations or restrictions and may represent an amplitude of the pitch angle offset which cannot be exceeded under all conditions.

The lower load threshold closed curve and the higher load threshold closed curve may be closed curves of any shape, for example a circle, an oval, an ellipse, a rectangle, a square or the like or a combination of portions of shapes as mentioned. Those closed curves may allow the accurate definition of regions in the tilt-yaw coordinate system where some degree of load reduction is required or not required.

According to an embodiment of the present invention, the increase of the common maximal amplitude of a pitch angle offset is in a stepwise-manner or continuous manner, in particular linear manner, or a combination thereof.

The common maximal amplitude of the pitch angle offset increases when propagating from the lower load threshold closed curve to the higher load threshold closed curve. The manner in which the common maximal amplitude increases can be defined for example by one or more mathematical functions, a table, a hash table, a look up table or any other data structure associating to values between the lower load threshold closed curve and the higher load threshold closed curve (i.e., the common maximal amplitude of the pitch angle offset). Thereby, it can accurately be defined how load reduction should change between the lower load threshold closed curve and the higher load threshold closed curve. Further processing of the common maximal amplitude may also be performed in some embodiments. For instance, filtering of the load based common maximal amplitude may be performed prior to setting the controller pitch amplitude limits. Such filtering may reduce rapid changes in the limits for instance by allowing rapid increases in pitch amplitude with slower decreases in pitch amplitude.

According to an embodiment of the present invention, the lower load threshold closed curve and the higher load threshold closed curve are offset in the tilt-direction by a tilt moment set point. When the lower load threshold closed curve and the higher load threshold closed curve are offset in the tilt-direction, a mean tilt moment can be accounted for in a very simple manner.

According to an embodiment of the present invention, the method further comprises prioritizing the load reduction either in the tilt-direction or in the yaw-direction by: setting the maximal amplitude of a pitch angle offset associated with that direction which is prioritized to be higher than the maximal amplitude of a pitch angle offset associated with the direction not prioritized based on the common maximal amplitude of a pitch angle offset; and/or not-prioritizing the load reduction either in the tilt-direction or in the yaw-direction by: setting the maximal amplitude of a pitch angle offset associated with both tilt-direction and yaw-direction equal; and/or disabling the load reduction either in the tilt-direction or in the yaw-direction by: setting the maximal amplitude of a pitch angle offset associated with the disabled-direction to zero.

For example, when the maximal amplitude of the pitch angle offset associated with the tilt-direction is defined to be higher than the maximal amplitude of the pitch angle offset associated with the yaw-direction, loads in the tilt-direction are more effectively reduced than loads in the yaw-direction. In other embodiments, the situation may be reversed. Thereby, great flexibility may be achieved and also hardware constraints may be met.

According to an embodiment of the present invention, prioritizing is changed on demand in real time and/or dependent on operation conditions, thereby providing control flexibility.

According to an embodiment of the present invention, for tilt and yaw moments within the lower load threshold closed curve the common maximal amplitude of a pitch angle offset is set to zero, and/or wherein for tilt and yaw moments outside the higher load threshold closed curve the common maximal amplitude of a pitch angle offset is set to the highest maximal amplitude of a pitch angle offset.

Thereby, it may be ensured that in particular (for example insignificant or not significantly damaging moments) load reduction is not being applied or effected by the individual pitch control. Furthermore, maximal possible load reduction may be applied when the loads are relatively high, i.e., outside the higher load threshold closed curve. Thereby, damage of components or fatigue damage may be reduced.

According to an embodiment of the present invention, the method further comprises deriving sinusoidal pitch angle offset control signals having a period of one rotor revolution, or harmonics thereof, based on the amplitudes and phases of pitch angle offsets (output by the controllers) for the three blades, in particular further comprising: adding sinusoidal pitch angle offset control signals to preliminary pitch angle references, to obtain final pitch angle references; supplying the final pitch angle references to respective pitching systems of the blades.

Thereby, the two outputs of the two controllers, i.e., the amplitudes of the pitch angle offset in the tilt-direction and yaw-direction are transformed into three individual pitch angle offset control signals for the three blades. Those pitch angle offset control signals are then added to preliminary pitch angle references (for example determined by another control portion and other operational parameters) to obtain the final pitch angle references. The respective pitching system of each of the blades is then controlled with the respective final pitch angle reference signal. According to those final pitch angle reference signals, the respective blades are then pitched.

According to an embodiment of the present invention, the method further comprises measuring flapwise and/or edgewise blade loads using blade installed strain and/or gauge sensors that are transformed into in-plane and out-of-plane blade loads, wherein the tilt moment, in particular the moment in the horizontal direction, and the yaw moment, in particular the moment in vertical direction, are derived from the blade loads by transforming, in particular using a Coleman transformation.

There are methods other than measuring blade loads to obtain the yaw and tilt moments, such as measuring rotating shaft bending moments that are then transformed to the yaw and tilt directions, directly measuring the moments in the yaw and tilt directions with displacement sensors or other methods as in US7160083B2, or similar measuring methods.

One or more sensors may for example be installed near a blade root section which will or may continuously measure loads in different directions, for example flapwise and edgewise blade loads. Those blade loads may vary with a period of one revolution or a harmonic thereof. The tilt moment and yaw moment may then be derived by performing a Coleman transformation, as is for example also detailed in the paper by Bossanyi mentioned above.

According to an embodiment of the present invention, the tilt moment and the yaw moment are moments having a reference point at the rotor center, where the rotation axis of the rotor intersects the blades pitch axes. In other embodiments, another reference point may be selected and the respective moments may be derived with respect to the other reference point.

It should be understood, that features, individually or in any combination, disclosed, described, explained or provided for a method of individual pitch control may also be applied, individually or in any combination, to an arrangement for individual pitch control according to embodiments of the present invention or vice versa.

According to an embodiment of the present invention it is provided an arrangement for individual pitch control of three rotor blades of a wind turbine, in particular for reducing loads, the arrangement comprising: a determining portion configured: to determine tilt moment and yaw moment acting on the wind turbine; to determine at least one maximal amplitude of a pitch angle offset based on the tilt moment and the yaw moment, the maximal amplitude of a pitch angle offset being different for at least two tuples of tilt moment and yaw moment; to derive individual amplitudes of pitch angle offsets for the three blades, the amplitudes being restricted to be not greater than the maximal amplitude of a pitch angle offset, the arrangement in particular configured to perform a method according to one of the preceding embodiments.

The arrangement may for example be a portion of a wind turbine controller.

According to an embodiment of the present invention it is provided a wind turbine, comprising: a rotor rotatable substantially about a horizontal rotation axis; three rotor blades mounted on a hub coupled with the rotor, each blade comprising a pitching system and in particular at least one load sensor; a controller connected to supply control signals to the pitching systems; an arrangement according to the preceding embodiment comprised in or connected to the controller.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention;
Fig. 2 schematically illustrates an arrangement for individual pitch control according to an embodiment of the present invention which is comprised in the wind turbine illustrated in Fig. 1;
Fig. 3 illustrates curves in a coordinate system considered according to embodiments of the present invention;
Fig. 4 illustrates curves and quantities considered for prioritization.

### Detailed Description

The illustration in the drawings is in schematic form.

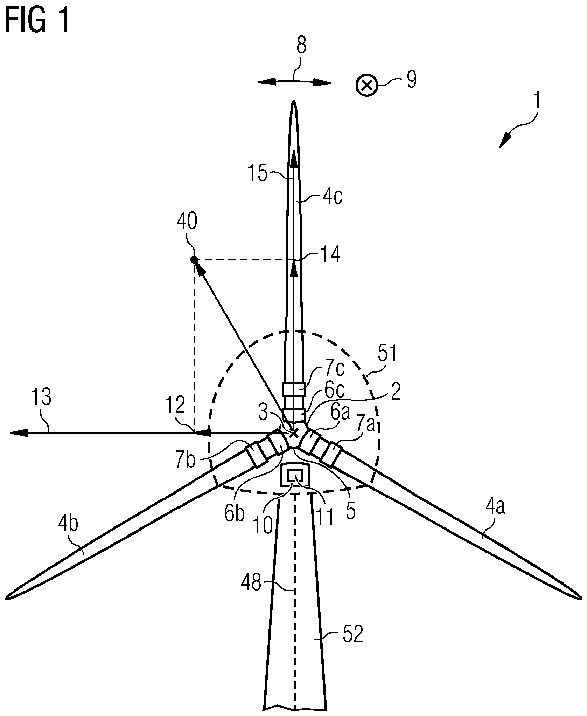

The wind turbine 1 schematically illustrated in **Fig. 1** comprises a rotor 2 (arranged within nacelle 51 mounted on top of tower 52) rotatable substantially about a horizontal rotation axis 3. The wind turbine 1 further comprises three rotor blades 4a, 4b, 4c which are mounted on a hub 5 which is coupled with the rotor 2, each of the blades comprising a pitching system, i.e., for the blades 4a, 4b, 4c pitching system 6a, 6b, 6c. Furthermore, each blade comprises a load sensor, i.e., for the blades 4a, 4b, 4c, the load sensors 7a, 7b, 7c. The load sensors 7a, 7b, 7c continuously measure load, for example blade flap moments and edge moments that can be transformed into in-plane moments, i.e., in the direction 8 within the rotor plane and/or out-of-plane moments along direction 9, as indicated in Fig. 1.

The wind turbine further comprises a controller 10 which is connected to receive load measurement signals from the load sensors 7a, 7b, 7c and to supply control signals to the pitching systems 6a, 6b, 6c.

The wind turbine 1 further comprises an arrangement 11 for individual pitch control according to an embodiment of the present invention which is in the illustrated embodiment comprised in the controller 10. The arrangement 11 is configured to carry out or control a method of individual pitch control, in particular together with the controller 10. Thereby, in-plane (i.e., along the direction 8) and/or out-of-plane (along the direction labelled with reference sign 9) blade loads are measured using blade installed strain gauge sensors 7a, 7b, 7c. From those measurement signals, the tilt moment 12 in the tilt-direction 13 (here the horizontal direction) and the yaw moment 14 in the yaw-direction 15 (here the vertical direction) are derived by performing a transformation, for example a Coleman transformation. Thereby, the method performed or carried out by the arrangement 11 determines the tilt moment 12 and the yaw moment 14 acting on the wind turbine.

Furthermore, the arrangement 11 determines at least one maximal amplitude of a pitch angle offset based on the tilt moment 12 and the yaw moment 14.

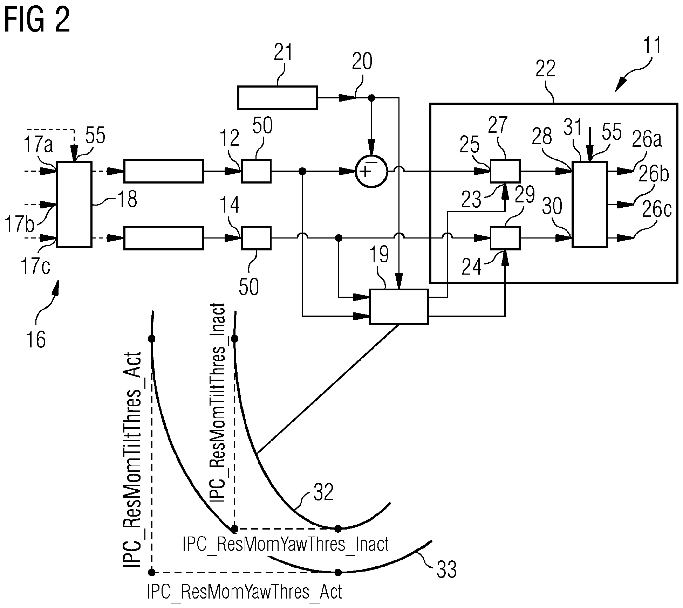

The arrangement 11 is illustrated according to a particular embodiment in **Fig. 2****.** At an input section 16, the arrangement 11 receives blade load measurement data 17a, 17b, 17c from measurements performed by the blade load sensors 7a, 7b, 7c. The arrangement comprises a transformation module 18 (receiving an azimuth value 55, i.e. rotor position) performing a Coleman transformation and outputs the tilt moment 12 as well as the yaw moment 14. The tilt moment 12 and the yaw moment 14 (optionally modified by filter modules 50) are received by a maximal amplitude determination module 19 which also receives a tilt moment setpoint 20 from a setpoint definition block 21.

The maximal amplitude determination module 19 then determines at least one maximal amplitude of a pitch angle offset based on the tilt moment 12 and the yaw moment 14. A derivation block 22 receives the at least one maximal amplitude of a pitch angle offset 23, 24. The determination module 22 also receives an error 25 between the tilt moment 12 and the tilt moment setpoint 20 ( the error being labelled with reference sign 25) and further receives the yaw moment 14. Based on the input signals, the determination module 22 derives individual pitch amplitudes 26a, 26b, 26c (in particular with not in detail illustrated phases) for the three blades 4a, 4b, 4c.

In the illustrated embodiment, the maximal amplitude determination module 19 determines a maximal amplitude of a pitch angle offset associated with the tilt-direction 23 and a maximal amplitude of a pitch angle offset associated with the yaw-direction 24 which might be different.

The determination module 22 comprises a tilt moment controller 27 which receives the error signal 25 as well as the maximal amplitude of the pitch angle offset associated with the tilt-direction 23 and outputs an amplitude of the pitch angle offset associated with the tilt-direction 28 being restricted to be not greater than the maximal amplitude of the pitch angle offset associated with the tilt-direction 23.

The determination module 22 further comprises a yaw moment controller 29 which receives the yaw moment 14 as well as the maximal amplitude of the pitch angle offset associated with the yaw-direction 24 provided by the maximal amplitude calculation module 19. The yaw moment controller 29 outputs an amplitude of the pitch angle offset associated with the yaw-direction 30.

The amplitudes 28, 30 output by the controllers 27, 29 are provided to the inverse Coleman transformation module 31 which derives therefrom the individual amplitudes 26a, 26b, 26c of the pitch angle offsets. As can be appreciated from Fig. 2 for example, the tilt moment controller 27 is configured regarding its output 28 to diminish the error 25 between the tilt moment 12 and the tilt moment setpoint 20. The yaw moment controller 29 is configured regarding its output 30 to diminish the yaw moment 14.

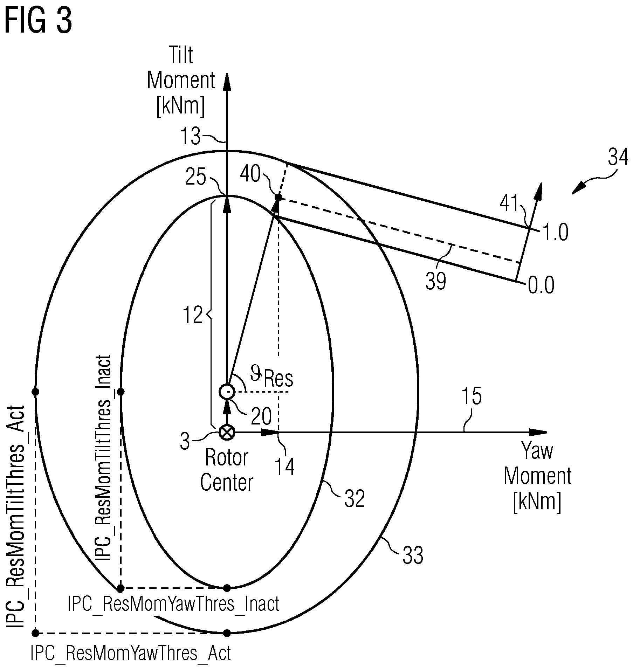

For determining the maximal amplitudes 23, 24 of the pitch angle offset associated with the tilt and yaw-direction based on the tilt moment 12 and the yaw moment 14, the maximal amplitude determination module 19 considers a lower load threshold closed curve 32 and a higher load threshold closed curve 33 as partly illustrated in Fig. 3 and completely illustrated in **Fig. 2****.** The coordinate system 34 illustrated in Fig. 3 is spanned by the tilt-direction 13 and the yaw-direction 15 similar to Fig. 1 but rotated by 90°. The method may involve the determination of a common maximal amplitude of a pitch angle offset 23, 24 to any tilt-yaw point 40 (total moment) between the lower load threshold closed curve 32 and the higher load threshold closed curve 33.

The common maximal amplitude 39 of the pitch angle offset is greater than or equal to zero at the lower load threshold closed curve 32 and increases to a highest maximal amplitude 41 of the pitch angle offset when propagating from the lower load threshold closed curve 32 to the higher load threshold closed curve 33. The maximal amplitude of the pitch angle offset associated with the tilt-direction and yaw-direction 23, 24 are set to be equal or different based on the common maximal amplitude 39 of the pitch angle offset.

As can be seen in **Fig. 3****,** the lower load threshold closed curve 32 as well as the higher load threshold closed curve 33 are offset in the tilt-direction 13 by the tilt moment setpoint 20. Thereby, a mean tilt moment may be ignored regarding load reduction in the tilt-direction.

The maximal amplitude determination module 19 also enables for prioritizing the load reduction either in the tilt-direction or in the yaw-direction by for example setting different maximal amplitudes of pitch angle offset associated on one hand with the tilt-direction and on the other hand on the yaw-direction.

From the amplitudes (in particular also including phases) of the pitch angle offsets 26a, 26b, 26c, sinusoidal pitch angle offset control signals may be derived and may be added to preliminary pitch angle references to obtain final pitch angle references which may be utilized for controlling the respective pitching signals 6a, 6b, 6c, individually for each of the three blades 4a, 4b, 4c. The arrangement 11 illustrated in Fig. 2 thereby comprises a determination portion including the modules depicted in Fig. 2 for carrying out the method.

To avoid IPC pitch action and increased bearing damage for low load conditions, load based activation thresholds may be used. The allowed IPC pitch amplitude starts at a value greater than or equal to zero at a lower load threshold and reaches the maximum allowed IPC pitch amplitude at a higher load threshold. These thresholds can take the form of an ellipse to set different load activation thresholds for different load directions. The tilt and yaw load directions are shown in Fig. 1, with different IPC activation thresholds for different load directions shown in Fig. 3. In this example the moment activation levels for the yaw direction are lower than the load activation levels in the tilt direction. Each load direction has a controller, with the set-point of the controller at zero moment for the yaw direction, and at the tilt moment set-point reference value for the tilt direction. The controllers calculate the IPC pitch amplitude and phase within the amplitude limits determined by the activation thresholds. Filtering can be used on the calculated amplitude limits, such as a multi-rate filter, where the allowed IPC pitch amplitude derived from the load activation levels increases quickly and then decreases more slowly.

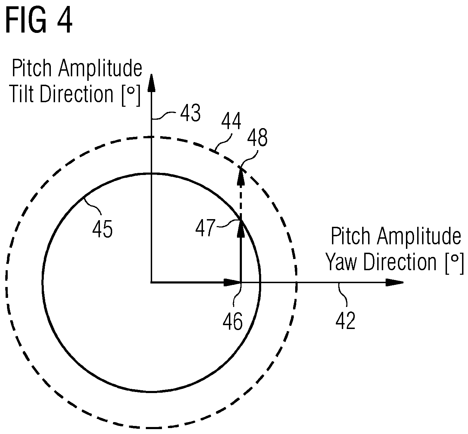

**Fig. 4** illustrates an embodiment for prioritizing the load direction due to for example a hardware constraint. Axis 42 denotes the pitch amplitude in the yaw-direction and axis 43 denotes the pitch amplitude in the tilt-direction. The dashed circle 44 may denote the common maximal amplitude 39 of the pitch angle offset as derived considering the location 40 (see e.g. Fig. 1 or 3) of the tilt moment and yaw moment and also considering the closed curves 32, 33. The circle 45 may denote a maximal amplitude due to a hardware limitation. In the illustrated embodiment, the yaw-direction has priority and thus the pitch amplitude in the yaw-direction 46 is fully applied for load reduction in the yaw-direction. The desired amplitude in the tilt direction 48, is restricted by the maximal amplitude circle 45, such that the amplitude for the tilt-direction 47 is restricted by the circle 45. By selecting the direction that has pitch amplitude priority, load reduction may be given preference in one or the other load directions.

Embodiments allow the prioritization of the load reduction direction if the IPC pitch amplitude is reduced due to hardware limitations. Hardware limitations may occur, for instance, due to limited hydraulic pump capacity or thermal limits. There are several possibilities that can be used for the prioritization depending on the load reduction needs:
- Tilt and yaw moment have equal priority for resultant moment reduction
- Yaw moment reduction has priority and tilt moment reduction uses remaining pitch amplitude
- Tilt moment reduction has priority and yaw moment reduction uses remaining pitch amplitude
- Only yaw moment reduction has priority and the tilt moment direction is ignored
- Only tilt moment reduction has priority and the yaw moment direction is ignored

As a further extension of the method, the load reduction prioritization can be adjusted based on turbine operation. For instance, as part of a yaw sequence the yaw moment could be prioritized, and once this sequence is complete, the prioritization returns to the previous load prioritization. An example of the prioritization of IPC pitch amplitude is shown in Fig. 4. In this example the yaw direction has priority and is allowed the full requested pitch amplitude. The tilt direction is allowed the remaining amplitude up to the current hardware limited constraints shown by the solid circle. Without these constraints, the tilt direction could use pitch amplitude up to the desired amplitude shown by the dashed circle and line. The desired amplitude is limited by configuration parameters.

The constrained pitch amplitude limit forms the hypotonus of a right triangle with the sides of the triangle being the amplitude in the yaw and tilt directions. For the example shown in Fig. 4, where the yaw direction has priority, the allowed IPC pitch amplitudes are given by: ${β}_{AmpYawLim} = min \left({β}_{AmpLim}, {β}_{AmpYaw}\right)$ ${β}_{AmpTiltLim} = min \left(\sqrt{{{β}_{AmpLim}}^{2} - {{β}_{AmpYawLim}}^{2}}, {β}_{AmpTilt}\right)$ Where
*β*_{AmpLim} is the constrained maximum IPC pitch limit
*β*_{AmpYawLim} is the limited IPC pitch amplitude in the yaw direction
*β*_{AmpYaw} is the desired IPC pitch amplitude in the yaw direction
*β*_{AmpTiltLim} is the limited IPC pitch amplitude in the tilt direction
*β*_{AmpTilt} is the desired IPC pitch amplitude in the tilt direction

Similar equations are used if the tilt has priority. If a load direction is ignored, the IPC pitch amplitude in that direction is set to zero, and the prioritized direction only needs to be constrained to the amplitude limit. For the equal prioritization of tilt and yaw, the direction of the peak IPC amplitude is not changed, but the magnitude is limited. ${β}_{AmpMag} = \sqrt{{{β}_{AmpTilt}}^{2} + {{β}_{AmpYaw}}^{2}}$ if *β*_{AmpMag} > *β*_{AmpLim} ${β}_{AmpTiltLim} = {β}_{AmpTilt} \left({β}_{AmpLim}/{β}_{AmpMag}\right)$ ${β}_{AmpYawLim} = {β}_{AmpYaw} \left({β}_{AmpLim}/{β}_{AmpMag}\right)$ else
*β*_{AmpTiltLim} = *β*_{AmpTilt}
*β*_{AmpYawLim} = *β*_{AmpYaw}

As can be appreciated referring to Fig. 2 again, the inputs to the controllers 27, 29 are the yaw moment 14 and tilt moments 12 (in particular error 25) which are determined from blade load sensors, azimuth and the Coleman transformation. The pitch offsets for the three blades are computed based on the outputs from the limited PI controllers 27, 29, azimuth and the inverse Coleman transformation and are designated as 26a,b,c. Embodiments of the present invention enable the control to prioritize yaw, tilt or the resulting moment and to fully utilize the available pitch amplitude for designated purposes. If a pitch amplitude limitation is hit, it may be chosen that one direction (yaw/tilt/or the resulting direction) may have its full request met before supporting the second direction with whatever amplitude is left available within the maximum pitch amplitude limit (compare Fig. 4). The prioritization may be updated on the fly or in real time if demands change.

Embodiments of the present invention may provide the following Features (to which the invention is not restricted
- One IPC maximum pitch amplitude. (Calculated based on e.g. pitch system properties and constraints, desired load reduction)
- Two PI controllers (one for tilt, one for yaw).
- One optional tilt moment offset parameter.
- Activation moment thresholds for tilt, yaw, and hence for resulting moments (forming an ellipse).
- Prioritization modes to give priority to yaw, tilt or the resulting moment. For any of the first two, this means that when you hit a pitch amplitude limitation, you will make sure that one direction (yaw or tilt) will have its full request met before supporting the second direction with whatever amplitude is left available within the maximum pitch amplitude limit.
- Adaptable prioritization mode. Example: Yaw support can come on an ask for short-term priority of yaw moment reduction.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of individual pitch control of three rotor blades (4a,b,c) of a wind turbine (1), in particular for reducing loads, the method comprising:
determining tilt moment (12) and yaw moment (15) acting on the wind turbine (1), the vector addition of the tilt moment and the yaw moment being a total moment;
determining two maximal amplitudes (39,23,24) of a pitch angle offset based on the tilt moment (12) and the yaw moment (15), the maximal amplitudes (39,23,24) of a pitch angle offset being in particular prioritized for the reduction of loading in a selected moment direction;
deriving amplitudes (28, 30; 26a,b,c) of pitch angle offsets for tilt-direction (13) and yaw-direction (15), the amplitudes being restricted to be not greater than the maximal amplitude (39,23,24) of a pitch angle offset.

2. Method according to the preceding claim, comprising:
determining maximal amplitudes of a pitch angle offset (23, 24) associated with a tilt-direction and a yaw-direction, respectively, based on the tilt moment (12) and the yaw moment (14);
deriving an amplitude (28; 26a,b,c) of pitch angle offset for tilt-direction (13) being restricted to be not greater than the maximal amplitude (23) of a pitch angle offset associated with a tilt-direction;
deriving an amplitude (30; 26a,b,c) of pitch angle offset for yaw-direction (13) being restricted to be not greater than the maximal amplitude (24) of a pitch angle offset associated with a yaw-direction.

3. Method according to the preceding claim 2, further comprising:
supplying the tilt moment (12) and the maximal amplitude (23) of the pitch angle offset associated with tilt-direction to a tilt moment controller (27) outputting the amplitude (28) of the pitch offset associated with tilt-direction (13) being restricted to be not greater than the maximal amplitude (23) of the pitch angle offset associated with tilt-direction (13);
supplying the yaw moment (14) and the maximal amplitude (24) of the pitch angle offset associated with yaw-direction (15) to a yaw moment controller (29) outputting the amplitude (30) of the pitch offset associated with yaw-direction (15) being restricted to be not greater than the maximal amplitude (24) of the pitch angle offset associated with yaw-direction;
deriving individual amplitudes (26a,b,c) and phases of pitch angle offsets for the three blades by transforming, in particular using inverse Coleman transformation (31), the amplitude (28) of the pitch offset associated with tilt-direction and the amplitude (30) of the pitch offset associated with yaw-direction.

4. Method according to any one of the preceding claims,
wherein the tilt moment controller (27) is configured regarding its output (28) to diminish an error (25) between the tilt moment (12) and a tilt moment set point (20) being larger than zero; and/or
wherein the yaw moment controller (29) is configured regarding its output (30) to diminish the yaw moment (14).

5. Method according to any one of the preceding claims, wherein determining maximal amplitudes (23, 24) of a pitch angle offset associated with tilt and yaw based on the tilt moment and the yaw moment comprises:
considering, in a coordinate system spanned by a tilt-direction (13) and a yaw-direction (15), a lower load threshold closed curve (32) and a higher load threshold closed curve (33), in particular ellipses;
associating a common maximal amplitude (39) of a pitch angle offset with any tilt-yaw point (40) between the lower load threshold closed curve (32) and the higher load threshold closed curve (33), the common maximal amplitude (39) of a pitch angle offset being greater than or equal to zero at the lower load threshold closed curve (32) and increasing to a highest maximal amplitude (41) of the pitch angle offset when propagating from the lower load threshold closed curve (32) to the higher load threshold closed curve (33);
setting the maximal amplitudes (23, 24) of a pitch angle offset associated with tilt-direction and yaw-direction to be equal or different based on the common maximal amplitude of a pitch angle offset, in particular considering at least one hardware and/or operational restriction.

6. Method according to the preceding claim, wherein the increase of the common maximal amplitude (39) of a pitch angle offset is in a stepwise-manner or continuous manner, in particular linear manner, or a combination thereof.

7. Method according to any one of the preceding claims, wherein the lower load threshold closed curve (32) and the higher load threshold closed curve (33) are offset in the tilt-direction by a tilt moment set point (20).

8. Method according to any one of the preceding claims, further comprising:
prioritizing the load reduction either in the tilt-direction (13) or in the yaw-direction (15) by:
allowing the desired amplitude of a pitch angle offset associated with that direction which is prioritized to be fulfilled prior to the desired amplitude of a pitch angle offset associated with the direction not prioritized based on the common maximal amplitude of a pitch angle offset; and/or
not-prioritizing the load reduction either in the tilt-direction or in the yaw-direction by:
setting the maximal amplitude of a pitch angle offset associated with both tilt-direction and yaw-direction equal; and/or
disabling the load reduction either in the tilt-direction or in the yaw-direction by:
setting the maximal amplitude of a pitch angle offset associated with the disabled-direction to zero.

9. Method according to the preceding claim,
wherein prioritizing is changed on demand in real time and/or dependent on operation conditions.

10. Method according to any one of the preceding claims,
wherein for tilt and yaw moments within the lower load threshold closed curve (32) the common maximal amplitude of a pitch angle offset is set to zero, and/or
wherein for tilt and yaw moments outside the higher load threshold closed curve (33) the common maximal amplitude of a pitch angle offset is set to the highest maximal amplitude of a pitch angle offset.

11. Method according to any one of the preceding claims, further comprising:
deriving sinusoidal pitch angle offset control signals having period of one rotor revolution, or harmonics thereof, based on the amplitudes (26a,b,c) and phases of pitch angle offsets for the three blades, in particular further comprising:
adding sinusoidal pitch angle offset control signals to preliminary pitch angle references, to obtain final pitch angle references;
supplying the final pitch angle references to respective pitching systems of the blades.

12. Method according to any one of the preceding claims,
measuring flapwise and/or egewise blade loads (17a,b,c) using blade installed and/or rotor installed strain gauge and/or fibre optic sensor, in particular fibre Bragg sensor and/or other load sensors (7a,b,c),
wherein the tilt moment (13), in particular moment in horizontal direction, and the yaw moment (15), in particular moment in vertical direction, are derived from the blade loads by transforming, in particular using a Coleman transformation (18).

13. Method according to any one of the preceding claims, wherein tilt moment (12) and yaw moment (14) are moments having a reference point at the rotor center, where the rotation axis (3) of the rotor having mounted thereon the blades intersects the blade pitch axes (48).

14. Arrangement (11) for individual pitch control of three rotor blades (4a,b,c) of a wind turbine (1), in particular for reducing loads, the arrangement comprising:
a determining portion configured:
to determine tilt moment (12) and yaw moment (14) acting on the wind turbine, the vector addition of the tilt moment and the yaw moment being a total moment;
to determine at least one, in particular two, maximal amplitude (39, 23, 24) of a pitch angle offset based on the tilt moment (12) and the yaw moment (14), the maximal amplitude of a pitch angle offset being in particular prioritized for the reduction of loading in a selected moment direction and being in particular different for at least different values of the total moment;
to derive individual amplitudes (28, 30; 26a,b,c) of pitch angle offsets for tilt-direction (13) and yaw-direction (15), the amplitudes being restricted to be not greater than the maximal amplitude (39, 23, 24) of a
pitch angle offset,
the arrangement in particular configured to perform a method according to one of the preceding claims.

15. Wind turbine (1), comprising:
a rotor (2) rotatable substantially about a horizontal rotation axis (3);
three rotor blades (4a,b,c) mounted on a hub (5) coupled with the rotor (2), each blade comprising a pitching system (6a,b,c) and in particular at least one load sensor (7a,b,c);
a controller (10) connected to supply control signals to the pitching systems;
an arrangement (11) according to the preceding claim comprised in or connected to the controller (10).
